# EUROPEAN PATENT APPLICATION

(11) **EP 4 564 876 A1**
(43) Date of publication of application: **04.06.2025**
(21) Application number: 23845245.2
(22) Date of filing: 30.06.2023
(51) Int. Cl.: H04W 12/122

(54) **COMMUNICATION METHOD AND APPARATUS**

(30) Priority: 29.07.2022 CN 202210908597
(71) Applicant: Huawei Technologies Co., Ltd., Shenzhen, Guangdong 518129 (CN)
(72) Inventor: SHI, Dai, Shenzhen, Guangdong 518129 (CN); XIONG, Xiaochun, Shenzhen, Guangdong 518129 (CN); WANG, Haiguang, Shenzhen, Guangdong 518129 (CN)
(74) Representative: Gill Jennings & Every LLP
(86) International application number: PCT/CN2023/104980
(87) International publication number: WO 2024/022032

(57) **Abstract**

A communication method and apparatus are provided. The method includes: A first terminal determines an identifier of the first terminal, where a length of the identifier of the first terminal is less than or equal to a first length, and the first length is configured in the first terminal before the first terminal performs random access to a network; the first terminal sends a message 3 in a random access process to a network device, where the message 3 includes the identifier of the first terminal; and the first terminal receives a message 4 in the random access process from the network device, where the message 4 includes information identifying a second terminal, and a length of the information identifying the second terminal is less than the first length. **In** the solution, information that can be obtained by the first terminal by using the message 4 in the random access process is the information identifying the second terminal, and the length of the information identifying the second terminal is less than the first length. Compared with a solution in which a first terminal can obtain, by using a message 4, information corresponding to a first length, this solution reduces an amount of information in covert communication caused by a Sparrow vulnerability.

## Description

### CROSS-REFERENCE TO RELATED APPLICATIONS

This application claims priority to Chinese Patent Application No. 202210908597.4, filed with the China National Intellectual Property Administration on July 29, 2022, and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

Random access is a necessary process of establishing a radio link between a terminal and a network. Data transmission can be normally performed between a base station and a terminal only after the random access is completed. In a random access process, the terminal may send a message 3 to the base station, where the message 3 carries an identifier of the terminal. When receiving the message 3, the base station broadcasts a message 4 to the terminal in plaintext, where the message 4 carries information, namely, the identifier of the terminal, carried in the message 3. In this process, an illegal attacker may perform covert communication by using the message 3 and the message 4 in the random access process. This application focuses on how to reduce impact caused by the covert communication.

### SUMMARY

This application provides a communication method and apparatus, to reduce impact caused by covert communication in a random access process.

According to a first aspect, a communication method is provided. The method may be performed by a first terminal, or a component (a processor, a chip, or the like) disposed in the first terminal. For example, the method is performed by the first terminal. The method includes: The first terminal determines an identifier of the first terminal, where a length of the identifier of the first terminal is less than or equal to a first length, and the first length is configured in the first terminal before the first terminal performs random access to a network, or optionally the first length is a length of an identifier of a terminal specified in a long-term evolution LTE system, a length of an identifier of a terminal specified in a new radio NR system, or a length of an identifier of a terminal specified in a protocol. Optionally, the first length may be 40 bits. The first terminal sends a message 3 in a random access process to a network device, where the message 3 includes the identifier of the first terminal. The first terminal receives a message 4 in the random access process from the network device, where the message 4 includes information identifying a second terminal, and a length of the information identifying the second terminal is less than the first length.

According to the foregoing design, the length of the information, for identifying the second terminal, obtained by the first terminal by using the message 4 in the random access process is less than the first length configured before the first terminal performs random access to the network. Even if the first terminal is an illegal attacker, the first terminal can obtain only an amount of information whose length is less than the first length. Compared with a current solution in which an illegal attacker can obtain an amount of information of a first length by using a message 4 in a random access process, this application can reduce an amount of information in covert communication in the random access process, and reduce impact caused by covert communication in the random access process as much as possible.

In a design, the method further includes: The first terminal receives a first broadcast message from the network device, where the first broadcast message includes information indicating a second length, and the second length is less than the first length; and optionally the first broadcast message is a system information block SIB, for example, a SIB 1. This is not limited. The determining an identifier of the first terminal includes: The first terminal determines the identifier of the first terminal based on the second length. Optionally, the length of the identifier of the first terminal may be the second length or less than the second length. For example, the first terminal may adjust, based on a local configuration and policy, the second length indicated by the network device. Optionally, in a scenario in which the length of the identifier, of the first terminal, determined by the first terminal is less than the second length, in addition to the identifier of the first terminal, the message 3 in the random access process sent by the first terminal to the network device may further include indication information such as the length of the identifier of the first terminal, or a location of the identifier of the first terminal.

According to the foregoing design, the network device sends the first broadcast message to the first terminal, where the first broadcast message indicates the second length. The first terminal determines the identifier of the first terminal based on the second length, where the length of the identifier of the first terminal is less than or equal to the second length. Because the second length is less than the first length, the length of the identifier of the first terminal is definitely less than the first length. The first terminal includes the identifier of the first terminal in the message 3 in the random access process, and the network device broadcasts, in plaintext by using the message 4 in the random access process, information obtained from the message 3. In the foregoing design, a length of the information that is obtained from the message 3 and that is broadcast by the network device in plaintext is less than the first length. Compared with the current solution in which a network device broadcasts, in plaintext by using the message 4, information of the first length in a message 3, this application can reduce bits of covert communication in the random access process, and reduce a value of a vulnerability used by an illegal attacker.

In a design, the message 3 includes a first sequence, the first sequence includes the identifier of the first terminal, and a length of the first sequence is equal to the first length. Optionally, the first sequence further includes first data, and the first data is preset data, or the first data is data received from the network device before the message 3. Optionally, the first data is the data received from the network device before the message 3, and the method further includes: The first terminal receives a message 2 in the random access process from the network device, where the message 2 includes the first data, and the first data is a temporary cell radio network temporary identity.

According to the foregoing design, the first terminal reduces the length of the identifier of the first terminal, to reduce bits of covert communication in the random access process. However, because a length of an identifier of a terminal specified in a current protocol is the first length, in the foregoing design, after determining the identifier of the terminal whose length is less than the first length, data padding is performed on the identifier of the first terminal by using preset data, previously notified data, or the like, and the first sequence is determined. The first terminal includes the first sequence in the message 3 in the random access process, and the network device may broadcast the first sequence in plaintext by using the message 4 in the random access process. In this design, on the premise of reducing the bits of covert communication in the random access process, a specification on the length of the identifier of the terminal in the current protocol can be met, and this design is compatible with the current protocol.

In a design, the method further includes: The first terminal verifies, based on the identifier of the first terminal, the information identifying the second terminal, where the information identifying the second terminal is an identifier of the second terminal. Optionally, if the identifier of the first terminal is the same as the identifier of the second terminal, it is considered that random access of the first terminal succeeds; or if the identifier of the first terminal is different from the identifier of the second terminal, it is considered that random access of the first terminal fails.

In a design, the method further includes: The first terminal receives a second broadcast message from the network device, where the second broadcast message does not include information indicating a second length, and the second length is less than the first length; and optionally the second broadcast message may be a SIB, for example, a SIB 1. That the first terminal determines an identifier of the first terminal includes: The first terminal determines the identifier of the first terminal based on the first length. For example, the length of the identifier of the first terminal is the first length.

In a design, the message 4 includes a second sequence, the second sequence includes the information identifying the second terminal, and a length of the second sequence is equal to the first length. Optionally, the second sequence further includes second data, and the second data is preset data, or the second data is data received from the network device before the message 4. Optionally, the second data is the data received from the network device before the message 4, and the method further includes: The first terminal receives the message 2 in the random access process from the network device, where the message 2 includes the second data, and the second data is a temporary cell radio network temporary identity.

According to the foregoing design, the message 4 includes the information identifying the second terminal, and may be a part of data in the identifier of the second terminal. This can reduce an amount of information in covert communication in the random access process. Further, to meet a specification that the length of the identifier of the terminal is the first length specified in the current protocol, the second data is used to perform data padding on the part of data to obtain the second sequence, where the message 4 includes the second sequence. The foregoing design can be used to not only reduce the amount of information in covert communication in the random access process, but also meet the specification of the length of the identifier of the terminal in the current protocol, and be compatible with the current protocol.

In a design, the method further includes: The first terminal determines, in the second sequence according to a data truncating rule, the information identifying the second terminal, and determines a first part of data in the identifier of the first terminal, where the information identifying the second terminal is a part of data in an identifier of the second terminal; and the first terminal verifies, based on the first part of data, the information identifying the second terminal.

According to the foregoing design, the message 4 includes the second sequence, and the second sequence includes the part of data in the identifier of the second terminal. The first terminal truncates the second sequence according to the data truncating rule to obtain the part of data, and also truncates the identifier of the first terminal to obtain a part of data. If the two parts of data are the same, it is considered that random access succeeds; or if the two parts of data are different, it is considered that random access fails. The data truncating rule may be preset, or may be notified by the network device to the first terminal in advance. This is not limited. In the foregoing solution, when the message 4 carries the second sequence, the first terminal determines whether random access of the first terminal succeeds.

In a design, the method further includes: The first terminal determines a second part of data in the identifier of the first terminal according to a data truncating rule; and the first terminal verifies, based on the second part of data, the information identifying the second terminal included in the message 4, where the information identifying the second terminal is a part of data in the identifier of the second terminal.

According to the foregoing design, the message 4 directly includes the part of data in the identifier of the second terminal. The first terminal may truncate the identifier of the first terminal according to the data truncating rule to obtain the part of data, and the part of data may be referred to as the second part of data. If the second part of data is the same as the part of data included in the message 4, it is considered that random access of the first terminal succeeds; or if the two parts of data are different, it is considered that random access of the first terminal fails. In the foregoing design, when the message 4 carries the part of data in the identifier of the second terminal, the first terminal determines whether random access of the first terminal succeeds.

According to a second aspect, a communication method is provided. The method is performed by a network device, or a component (a processor, a chip, or the like) disposed in the network device. For example, the method is performed by the network device. The method includes: The network device receives a message 3 in a random access process from a terminal, where the message 3 includes an identifier of the terminal, a length of the identifier of the terminal is less than or equal to a first length, and the first length is configured in the terminal before the terminal performs random access to a network, or optionally the first length is a length of an identifier of a terminal specified in a long-term evolution LTE system, a length of an identifier of a terminal specified in a new radio NR system, or a length of an identifier of a terminal specified in a protocol. Optionally, the first length is 40 bits. The network device sends a message 4 in a random access process to the terminal, where the message 4 includes information identifying the terminal, and a length of the information identifying the terminal is less than the first length.

According to the foregoing design, the length of the information included in the message 4 in the random access process that is broadcast in plaintext by the network device is less than the first length. Compared with a solution in which a length of information included in a message 4 in a random access process that is broadcast in plaintext by a network device is a first length, this application can reduce an amount of information in covert communication obtained by an illegal attacker by using the message 4.

In a design, the method further includes: The network device sends a first broadcast message to the terminal, where the first broadcast message includes information indicating a second length, the second length is less than the first length, and the length of the identifier of the terminal is determined based on the second length.

According to the foregoing design, the network device notifies, in advance by using the first broadcast message, the terminal that the length of the identifier of the terminal carried in the message 3 is the second length, the second length is less than the first length, and a length of information (namely, the identifier of the terminal) broadcast by the network device in plaintext in the message 4 is also less than the first length. In a scenario of illegal communication of random access, an illegal receiving end can obtain only an amount of information whose length is less than the first length. This reduces the amount of information in covert communication in the random access process.

In a design, before the sending a first broadcast message to the terminal, the method further includes: The network device determines the second length based on a network load.

According to the foregoing design, when a load of the network device is high, a value of the second length may be set to be large, for example, set to 39, to prevent a plurality of terminals from selecting a same random number as identifiers of the terminals. When a load of the network device is low, a value of the second length may be set to be small, for example, set to 8, so that the network device flexibly adjusts the value of the second length based on the load.

In a design, the message 3 includes a first sequence, the first sequence includes the identifier of the terminal, and a length of the first sequence is equal to the first length. Optionally, the first sequence further includes first data, and the first data is preset data, or the first data is data sent to the terminal before the message 3. Optionally, the first data is the data sent to the terminal before the message 3, and the method further includes: The network device sends a message 2 in the random access process to the terminal, where the message 2 includes the first data, and the first data is a temporary cell radio network temporary identity.

According to the foregoing design, when receiving the message 3, the network device obtains the first sequence in the message 3. The network device generates the message 4 based on the first sequence, that is, the message 4 includes the first sequence. The first sequence includes the identifier of the terminal and the first data, and the length of the identifier of the terminal is less than the first length. The first data is the preset data, or data that is notified by the network device to the terminal in advance. For an illegal attacker, even if the identifier of the terminal is set to information with a specific meaning, only an amount of information whose length is less than the first length can be transmitted by using the message 4 in the random access process. This reduces the amount of information in covert communication in the random access process.

In a design, the method further includes: The network device sends a second broadcast message to the terminal, where the second broadcast message does not include information indicating a second length, the second length is less than the first length, and the length of the identifier of the terminal is equal to the first length.

According to the foregoing design, the message 3 includes the identifier of the terminal, and the length of the identifier of the terminal is equal to the first length. When obtaining the identifier of the terminal in the message 3, the network device truncates the identifier of the terminal according to a data truncating rule to obtain a part of data, and broadcasts the part of data in plaintext by using the message 4. The part of data is used as information identifying the terminal. In this way, the illegal receiving end can obtain only the part of data sent by another terminal by using the message 3. This reduces the amount of information in covert communication in the random access process.

In a design, the message 4 includes a second sequence, the second sequence includes the information identifying the terminal, and a length of the second sequence is equal to the first length. Optionally, the second sequence further includes second data, and the second data is preset data, or the second data is data sent to the terminal before the message 4. Optionally, the second data is the data sent to the terminal before the message 4, and the method further includes: The network device sends the message 2 in the random access process to the terminal, where the message 2 includes the second data, and the second data is a temporary cell radio network temporary identity.

According to the foregoing design, to meet a specification of a length of an identifier of the terminal in a current protocol, after a part of data is obtained through truncating the identifier of the terminal in the message 3, data padding is performed on the part of data obtained through truncating by using preset data or the data that is notified to the terminal in advance, to obtain the second sequence. The network device broadcasts the second sequence in plaintext by using the message 4. The foregoing design meets the specification of the length of the identifier of the terminal in the current protocol.

In a design, the method further includes: The network device determines, based on a network load, a length of the information identifying the terminal, where the information identifying the terminal is a part of data obtained through truncating the identifier of the terminal.

According to the foregoing design, when the network load is high, a value of the length of the part of data obtained through truncating may be set to be large, so as to avoid collision caused by a same part of data in identifiers of different terminals; or when the network load is low, a value of the length of the part of data obtained through truncating may be set to be small, so as to further reduce the amount of information in covert communication in the random access process.

According to a third aspect, a communication method is provided. The method is performed by a terminal, or a component (a processor, a chip, or the like) configured in the terminal. The method includes: The terminal receives a message 2 in a random access process from a network device, where the message 2 includes first data. The terminal sends a message 3 in the random access process to the network device, where the message 3 includes an identifier of a first terminal. The terminal receives a message 4 in the random access process from the network device, where the message 4 includes a first sequence, and the first sequence is determined based on the first data and an identifier of a second terminal. The terminal verifies the first sequence based on the identifier of the first terminal and the first data.

According to the foregoing design, when receiving the identifier of the terminal that is sent by the terminal by using the message 3, the network device determines the first sequence based on the identifier of the terminal and the first data. The network device includes the first sequence in the message 4, and does not include, in plaintext, the data (namely, the identifier of the terminal) obtained by using the message 3. In this way, in a scenario in which an illegal receiving end cannot learn of the first data, it is difficult to decode the first sequence and obtain the data carried in the message 3. This resolves an illegal communication problem in the random access process to some extent.

Optionally, a receiving end needs to decode, based on the first data, the first sequence carried in the message 4, to determine whether random access of the current terminal succeeds. It can be learned that in this application, the terminal needs to learn of the first data for encoding the data carried in the message 3. In the design, the random first data that is originally carried in the message 2 is encrypted, and the first data does not need to be additionally notified to the terminal. This reduces air interface overheads.

In a design, that the terminal verifies the first sequence based on the identifier of the first terminal and the first data includes: The terminal performs a hash operation on the identifier of the first terminal and the first data, to determine a hash value; the terminal obtains the hash value through truncating according to a hash value truncating rule; and the terminal verifies the first sequence based on a hash value obtained through truncating.

In the foregoing design, if the hash value obtained through truncating by the terminal is the same as the first sequence, it is considered that random access of the current terminal succeeds; or if the hash value obtained through truncating by the terminal is different from the first sequence, it is considered that random access of the current terminal fails. The hash value truncating rule may be specified in a protocol, or notified by the network device. For example, the terminal receives indication information of the hash value truncating rule from the network device, where the hash value truncating rule includes the following information: a length of data obtained through truncating or a location of data obtained through truncating.

In a design, the first data includes a temporary cell radio network temporary identity.

In a design, a length of the first sequence is the same as a length of the identifier of the first terminal, and is a first length. The first length is a length of an identifier of a terminal specified in a long-term evolution LTE system, or a length of an identifier of a terminal specified in a new radio NR system, or a length of an identifier of a terminal specified in a protocol. Optionally, the first length is 40 bits.

According to the foregoing design, the data in the message 3, namely, the identifier of the terminal, is no longer broadcast in plaintext in the message 4, but the data in the message 3 is encoded based on the first data. This can resolve, in a specific program, a problem of covert communication at the illegal receiving end in the random access process. Further, because the identifier of the terminal specified in the current protocol is the first length, that is, a length at a location corresponding to the message 4 specified in the current protocol is the first length, in this design, the identifier of the terminal is replaced with the first sequence of the same first length. This, on the basis of implementing encryption protection on the identifier of the terminal, meets a requirement of the current protocol, is easily integrated with the current protocol, and has small impact on a current network.

According to a fourth aspect, a communication method is provided. The method is performed by a network device, or a component (a processor, a chip, or the like) disposed in the network device. For example, the method is performed by the network device. The method includes: The network device sends a message 2 in a random access process to a terminal, where the message 2 includes first data. The network device receives a message 3 in the random access process from the terminal, where the message 3 includes an identifier of the terminal. The network device determines a first sequence based on the first data and the identifier of the terminal. The network device sends a message 4 in the random access process to the terminal, where the message 4 includes the first sequence.

In the foregoing design, the network device no longer broadcasts, in plaintext, data carried in the message 3, but determines the first sequence based on the data carried in the message 3, that is, the identifier of the terminal and the first data. Broadcasting the first sequence in plaintext by using the message 4, to some extent, can protect the data carried in the message 3 from being stolen by an illegal receiving end. Further, in this design, the data obtained by using the message 3 is encrypted by using the random first data in the message 2, and the first data does not need to be additionally notified to the terminal. This reduces air interface overheads.

In a design, that the network device determines a first sequence based on the first data and the identifier of the terminal includes: The network device performs a hash operation on the first data and the identifier of the terminal, to determine a hash value; and the network device obtains the hash value through truncating according to a hash value truncating rule, to obtain the first sequence.

According to the foregoing design, a length of the hash value directly determined based on the first data and the identifier of the terminal is usually long. In this design, to meet a requirement that the identifier of the terminal carried in the message 4 is the first length, the determined hash value is obtained through truncating, and a length of a hash value obtained through truncating is the first length, and the hash value obtained through truncating may be referred to as the first sequence. This meets a requirement of the identifier of the terminal carried in the message 4 in the current protocol and meets a specification of the current protocol.

In a design, the method further includes: The network device sends indication information of the hash value truncating rule to the terminal, where the hash value truncating rule includes the following information: a length of data obtained through truncating or a location of data obtained through truncating.

According to the foregoing design, the network device notifies the terminal of the hash value truncating rule. The terminal performs a hash operation based on the first data and a locally stored identifier of the terminal, and obtains a determined hash value through truncating according to a same hash value truncating rule, to determine a second sequence. The second sequence may be considered as a hash value obtained through truncating. When the second sequence is the same as the first sequence received by using the message 4, it is considered that random access succeeds; or when the second sequence is different from the first sequence received by using the message 4, it is considered that random access fails. It can be learned that the network device notifies the terminal of the hash value truncating rule, so that the terminal can verify the first sequence received by using the message 4.

In a design, the first data includes a temporary cell radio network temporary identity.

In a design, a length of the first data is less than a length of the first sequence.

In a design, a length of the first sequence is the same as a length of the identifier of the terminal, and is a first length. The first length is a length of an identifier of a terminal specified in a long-term evolution LTE system, or the first length is a length of an identifier of a terminal specified in a new radio NR system, or the first length is a length of an identifier of a terminal specified in a protocol. Optionally, the first length is 40 bits.

According to a fifth aspect, a communication apparatus is provided. The apparatus may be a terminal, or an apparatus (for example, a chip) configured in the terminal, or an apparatus that can be used in a matching manner with the terminal. The apparatus has a function of implementing the method according to the first aspect or the third aspect. The function may be implemented by hardware, or may be implemented by hardware executing corresponding software. The hardware or the software includes one or more units corresponding to the foregoing functions, for example, a transceiver unit and a processing unit.

According to a sixth aspect, a communication apparatus is provided, and includes a unit or a means (means) configured to perform the steps according to any one of the first aspect or the third aspect.

According to a seventh aspect, a communication apparatus is provided, and includes a processor and a memory. The memory is configured to store computer instructions. When the apparatus runs, the processor executes the computer instructions stored in the memory, so that the apparatus performs the method according to the first aspect or the third aspect.

According to an eighth aspect, a communication apparatus is provided, and includes a processor coupled to a memory. The processor is configured to invoke a program stored in the memory, to perform the method according to the first aspect or the third aspect. The memory may be located in the apparatus, or may be located outside the apparatus. In addition, there may be one or more processors.

According to a ninth aspect, a communication apparatus is provided, and includes a processor and an interface circuit. The processor is configured to: communicate with another apparatus through the interface circuit, and perform the method according to the first aspect or the third aspect. There may be one or more processors.

According to a tenth aspect, a communication apparatus is provided. The apparatus may be a network device, or an apparatus (for example, a chip) configured in the network device, or an apparatus that can be used in a matching manner with the network device. The apparatus has a function of implementing the second aspect or the fourth aspect. The function may be implemented by hardware, or may be implemented by hardware executing corresponding software. The hardware or the software includes one or more units corresponding to the foregoing functions, for example, a transceiver unit and a processing unit.

According to an eleventh aspect, a communication apparatus is provided, and includes a unit or a means (means) configured to perform the steps according to any one of the second aspect or the fourth aspect.

According to a twelfth aspect, a communication apparatus is provided, and includes a processor and a memory. The memory is configured to store computer instructions. When the apparatus runs, the processor executes the computer instructions stored in the memory, so that the apparatus performs the method according to the second aspect or the fourth aspect.

According to a thirteenth aspect, a communication apparatus is provided, and includes a processor coupled to a memory. The processor is configured to invoke a program stored in the memory, to perform the method according to the second aspect or the fourth aspect. The memory may be located in the apparatus, or may be located outside the apparatus. In addition, there may be one or more processors.

According to a fourteenth aspect, a communication apparatus is provided, and includes a processor and an interface circuit. The processor is configured to: communicate with another apparatus through the interface circuit, and perform the method according to the second aspect or the fourth aspect. There may be one or more processors.

According to a fifteenth aspect, a chip system is provided, and includes a processor, configured to perform the method according to any one of the first aspect to the fourth aspect.

According to a sixteenth aspect, a computer-readable storage medium is provided. The computer-readable storage medium stores instructions, and when the instructions are run on a communication apparatus, the method according to any one of the first aspect to the fourth aspect is performed.

According to a seventeenth aspect, a computer program product is provided. The computer program product includes a computer program or instructions. When the computer program or the instructions are run by a communication apparatus, the method according to any one of the first aspect to the fourth aspect is performed.

According to an eighteenth aspect, a communication system is provided. The system includes the apparatus according to any one of the fifth aspect to the ninth aspect and the apparatus according to any one of the tenth aspect to the fourteenth aspect.

### BRIEF DESCRIPTION OF DRAWINGS

FIG. 1 is a diagram of an architecture of a communication system according to this application;
FIG. 2 is a flowchart of contention-based random access according to this application;
FIG. 3, FIG. 5, and FIG. 8 each are a flowchart of a communication method according to this application;
FIG. 4 is a diagram of comparison between an identifier of a terminal device in a current protocol and an identifier of a terminal device in this application;
FIG. 6 is a diagram of comparison between data carried in a Msg 4 in a current protocol and data carried in a Msg 4 in this application;
FIG. 7 and FIG. 9 each are a diagram of a hash operation according to this application; and
FIG. 10 and FIG. 11 each are a diagram of an apparatus according to this application.

### DESCRIPTION OF EMBODIMENTS

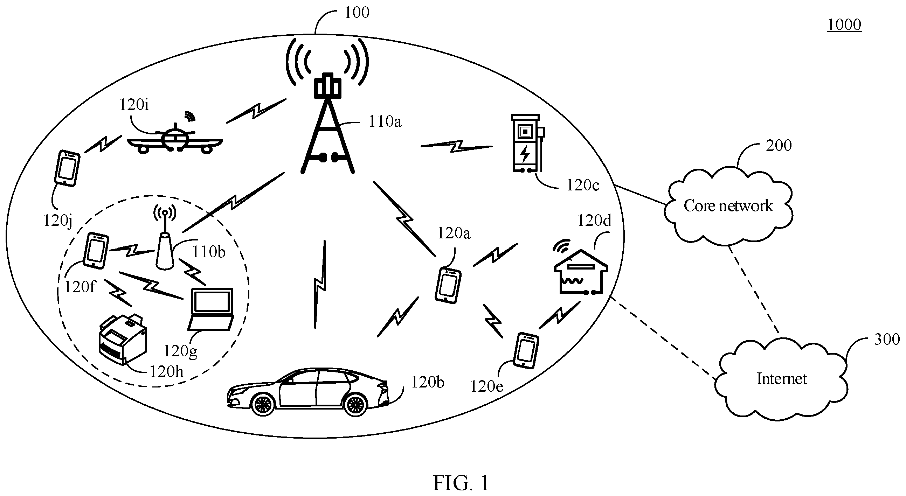

FIG. 1 is a diagram of an architecture of a communication system 1000 to which this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a diagram. The communication system may further include another network device, for example, may further include a wireless relay device and a wireless backhaul device, which are not shown in FIG. 1.

The radio access network device may also be referred to as a network device. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may alternatively be a module or unit that completes some functions of a base station, for example, may be a central unit (central unit, CU), or may be a distributed unit (distributed unit, DU). The CU completes functions of a radio resource control (radio resource control, RRC) protocol and a packet data convergence layer protocol (packet data convergence protocol, PDCP) of a base station, and may further complete a function of a service data adaptation protocol (service data adaptation protocol, SDAP). The DU completes functions of a radio link control (radio link control, RLC) layer and a medium access control (medium access control, MAC) layer of a base station, and may further complete functions of some physical (physical, PHY) layers or all physical layers. For specific descriptions of the foregoing protocol layers, refer to related technical specifications of a 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in this application. For ease of description, the following provides descriptions by using an example in which the radio access network device is a base station.

The terminal may alternatively be referred to as a terminal device, a user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in this application.

The base station and the terminal may be at fixed locations or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in this application.

Roles of the base station and the terminal may be relative. For example, the helicopter or the uncrewed aerial vehicle 120i in FIG. 1 may be configured as a mobile base station, and for the terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed on a licensed spectrum, or may be performed on an unlicensed spectrum, or may be performed on both the licensed spectrum and the unlicensed spectrum. Communication may be performed on a spectrum below 6 gigahertz (gigahertz, GHz), or may be performed on a spectrum above 6 GHz, or may be performed on the spectrum below 6 GHz and the spectrum above 6 GHz. A spectrum resource for wireless communication is not limited in this application.

In this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

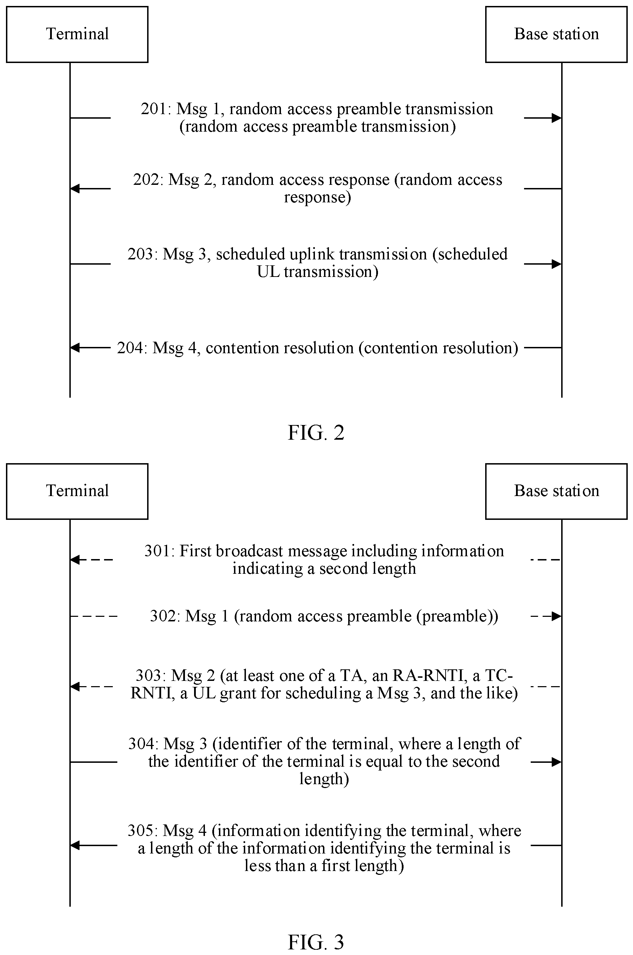

Generally, random access is classified into contention-based random access and non-contention-based random access. In this application, the contention-based random access is used as an example to describe solutions of this application. As shown in FIG. 2, a contention-based random access process may include the following steps.

Step 201: A terminal sends a message 1 (message 1, Msg 1) on a random access channel (physical random access channel, PRACH), where the Msg 1 includes a random access preamble preamble.

For example, the terminal selects one preamble from 64 preset preambles, and determines a random access resource for sending the preamble. The terminal sends, to a base station on the determined random access resource, the Msg 1 including the preamble.

Optionally, the preamble is a sequence. The base station performs signal processing on the received preamble sequence, and may determine a start location at which the base station receives the preamble, so as to obtain, through estimation, a transmission delay between the terminal and the base station, and further determine a timing advance (timing advance, TA) based on the transmission delay between the terminal and the base station. The base station notifies the terminal of the TA by using a Msg 2, and the terminal may adjust uplink timing based on the TA.

Optionally, the base station may further determine, by detecting the preamble, a time unit in which the base station receives the preamble, further infer a time unit in which the terminal sends the preamble, and determine, based on a correspondence between the time unit in which the terminal sends the preamble and a downlink transmit beam for the Msg 2, the downlink transmit beam for sending the Msg 2. In addition, on a terminal side, the terminal may infer, based on the time unit for sending the preamble, a downlink beam for receiving the Msg 2. Therefore, the base station may notify, in advance, the terminal of the correspondence between the time unit in which the terminal sends the preamble and the downlink transmit beam for the Msg 2. For example, the terminal broadcasts a message to notify the terminal. This is not limited.

Optionally, the base station may determine a random access radio network temporary identity (random access radio network temporary identity, RA-RNTI) based on a detected preamble identity (identity, ID), the random access resource for transmitting the preamble, and the like. The base station allocates a temporary cell radio network temporary identity (temporary cell radio network temporary identity, TC-RNTI) to the terminal that performs random access, determines an uplink grant (uplink, UL Grant) for scheduling a message 3 (message 3, Msg 3), and the like. The base station may include the determined RA-RNTI, the TC-RNTI, the UL grant, and the like in the Msg 2. This is not limited.

Step 202: The base station sends the message 2 (message 2, Msg 2) on a physical downlink shared channel (physical downlink shared channel, PDSCH), where the Msg 2 may be referred to as a random access response (random access response, RAP).

Optionally, the Msg 2 carries the timing advance (timing advance, TA), the RA-RNTI, the TC-RNTI, the UL grant for scheduling the Msg 3, and the like that correspond to the transmission delay determined in step 201. In a design, the base station broadcasts the Msg 2 in a downlink, and the terminal in a service range of the base station may receive the Msg 2, and may verify the RA-RNTI included in the Msg 2. If the verification succeeds, the terminal sends the Msg 3 to the base station based on UL grant scheduling in the Msg 2; or if the verification fails, the terminal performs no processing on the Msg 2. For example, the base station may determine the RA-RNTI based on the preamble sequence sent in the Msg 1 and the random access resource for sending the preamble. The terminal compares an RA-RNTI determined by the terminal with the RA-RNTI obtained in the Msg 2. If the two are the same, it is considered that the RA-RNTI is successfully verified, and the following step 203 of sending the Msg 3 to the base station is performed based on UL grant scheduling in the Msg 2; or if the two are different, the terminal performs no processing on the Msg 2, and the terminal may initiate random access again.

Step 203: The terminal sends the message 3 (message 3, Msg 3) to the base station, where the Msg 3 includes an identifier of the terminal.

Step 204: The base station sends a message 4 (message 4, Msg 4) to the terminal, where the Msg 4 may be referred to as a contention resolution message, the Msg 4 includes a contention resolution identity (contention resolution identity), and the contention resolution identity includes the identifier of the terminal received in the Msg 3. The Msg 4 may be used to resolve problems such as contention and conflict caused when a plurality of terminals attempt to use a same random access resource and a same preamble for access.

In the random access process shown in FIG. 2, a scenario in which a plurality of terminals simultaneously select a same random access resource and send a same preamble may occur. In this scenario, the base station can receive or detect only a preamble with strongest energy, and the base station cannot determine a quantity of terminals that simultaneously apply for an uplink resource in this scenario. The scenario is a scenario in which collision occurs during random access performed by the plurality of terminals. After receiving the Msg 1, the base station broadcasts the Msg 2 in the downlink on the PDSCH, where the Msg 2 carries the RA-RNTI. When receiving the Msg 2, the terminal calculates the RA-RNTI based on the preamble sent in the Msg 1, the random access resource for sending the preamble, and the like. If the RA-RNTI calculated by the terminal locally is the same as the RA-RNTI received from the base station, the terminal considers that the Msg 2 is sent to the terminal, and continues to send the Msg 3 to the base station based on UL grant scheduling in the Msg 2. When the plurality of terminals send the Msg 1 by using the same preamble and the same random access resource, RA-RNTIs determined by the plurality of terminals based on the preamble and the random access resource are the same. If the RA-RNTIs determined by the plurality of terminals are the same as the RA-RNTI notified by the base station in the Msg 2, the plurality of terminals send the Msg 3 to the base station based on UL grant scheduling in the Msg 2. Because the plurality of terminals send the Msg 3 on a same time-frequency resource based on UL grant scheduling, the Msgs 3 from the plurality of terminals collide with each other over an air interface, and the base station can correctly decode only one Msg 3. To resolve a contention access problem, the terminal sends a 40-bit random number to the base station in the Msg 3, to identify an identity of the terminal, and the identity may be referred to as the identifier of the terminal. Optionally, the 40-bit random number may include a 39-bit random number and a 1-bit reserved bit (reserved bit). Therefore, the 40-bit random number may also be referred to as a 39-bit random number and a 1-bit reserved bit. In subsequent descriptions, an example in which an identifier of a terminal device is a random number is used for description. When receiving and successfully decoding the Msg 3, the base station broadcasts, in the terminal contention resolution identity in the Msg 4 in the downlink, the 40-bit random number in the received Msg 3, that is, the base station broadcasts the Msg 4 in the downlink. The Msg 4 includes the contention resolution identity, and the contention resolution identity may include 48 bits. Among the 48 bits, 40 bits are the identifier of the terminal carried in the Msg 3, and the remaining 8 bits may be a service type identifier. This application focuses on transmission of the 40-bit identifier of the terminal. Therefore, in subsequent descriptions, a process in which the Msg 4 includes the identifier of the terminal is mainly described. When receiving the Msg 4, each of the plurality of terminals may compare the 40-bit identifier carried in the Msg 4 with the identifier of the terminal sent in the Msg 3. If the two identifiers are the same, the terminal considers that random access succeeds; or if the two identifiers are different, the terminal considers that random access fails. Optionally, the Msg 4 may carry scheduling information, and the like. After successful random access, the terminal may perform uplink communication, downlink communication, or the like with the base station based on the scheduling information carried in the Msg 4.

A vulnerability exists in the contention-based random access process, and the vulnerability may be referred to as an attack that exploits characteristics of air interface downlink broadcast in a random access process to transmit private information in stealth by overwriting effective information (stealth pirating attack by RACH rebroadcast overwriting, Sparrow, random access channel, RACH), or to put it simply, a covert communication attack in the random access process. An illegal terminal may exploit the Sparrow vulnerability in a random access mechanism to perform illegal covert communication. For example, an attacker terminal A and an attacker terminal B pre-negotiate information having a specific meaning. When a geographical location of the terminal A is far away from a geographical location of the terminal B, the terminal A may send the information having the specific meaning to a base station in a Msg 3 to replace a random number indicating an identifier of the terminal A. After receiving and correctly decoding the Msg 3 from the terminal A, the base station broadcasts in plaintext, in a Msg 4, the information having the specific meaning included in the Msg 3 by the terminal A, and the terminal B may obtain the Msg 4 through blind detection over an air interface at a remote geographical location, to obtain the information that is sent by the terminal A and that is carried in the Msg 4 and that has the specific meaning. Communication between the terminal A and the terminal B is performed in stealth, and the base station cannot sense the communication. How to avoid or reduce covert communication caused by the Sparrow vulnerability is a technical problem to be resolved in this application.

This application provides a solution for the Sparrow attack, including: A terminal determines an identifier of the terminal, where a length of the identifier of the terminal is less than or equal to a first length, and the first length is configured in the terminal before the terminal performs random access to a network. For example, the first length may be 40 bits. The terminal sends a Msg 3 in a random access process to a base station, where the Msg 3 includes the identifier of the terminal. When receiving the Msg 3 in the random access process, the base station sends a Msg 4 in the random access process to the terminal, where the Msg 4 in the random access process includes information identifying the terminal, and a length of the information identifying the terminal is less than the first length. For example, the first length is 40 bits. In a current solution, a length of an identifier of a terminal included by a base station in a Msg 4 is 40 bits. For an illegal attacker, an information amount of meaningful information obtained by using the Msg 4 in the random access process is 40 bits. However, in this solution, the length of the identifier of the terminal included by the base station in the Msg 4 is less than 40 bits. An information amount of meaningful information obtained by the illegal attacker by using the Msg 4 in the random access process is less than 40 bits. This reduces an amount of information in covert communication caused by the Sparrow vulnerability.

### Embodiment 1

In Embodiment 1, a length of an identifier of a terminal included in a Msg 3 sent by the terminal to a base station is less than a first length. When receiving the Msg 3, the base station obtains the identifier of the terminal from the Msg 3, and may use the identifier of the terminal as information identifying the terminal. The base station sends a Msg 4 to the terminal, where the Msg 4 includes the information identifying the terminal, the information identifying the terminal is the identifier of the terminal, and a length of the information identifying the terminal is less than the first length. Alternatively, when obtaining the identifier of the terminal from the Msg 3, the base station truncates the identifier of the terminal to obtain a part of data, and uses the part of data obtained through truncating as information identifying the terminal. The base station sends a Msg 4 to the terminal, where the Msg 4 includes the information identifying the terminal. In this case, the information identifying the terminal is the part of data obtained through truncating the identifier of the terminal, and a length of the information identifying the terminal is less than the first length.

For example, the information identifying the terminal included in the Msg 4 is the identifier of the terminal. In a design, the base station may send a broadcast message to the terminal, where the broadcast message may be referred to as a first broadcast message, the first broadcast message may indicate information of a second length, and the second length is less than the first length. The terminal may determine the identifier of the terminal based on the second length. For example, the length of the identifier of the terminal may be equal to the second length, or the length of the identifier of the terminal may be less than the second length. This is not limited.

For example, in an implementation, the base station notifies the second length by using the first broadcast message, and the terminal may adjust, based on a local configuration, a local policy, or the like, the second length notified by the base station. Certainly, the adjustment is usually adjustment of the length of the second length toward a small-size direction. For example, the length of the identifier of the terminal that is determined by the terminal is a third length, and the third length is less than the second length, or the like. Optionally, because the length of the identifier of the terminal is the third length, and is different from the second length notified by the base station, in addition to carrying the identifier of the terminal in the Msg 3 by the terminal, the Msg 3 further carries at least one of the following: indication information of the third length, a location of the identifier of the terminal in the Msg 3, or the like, so that the base station can extract the identifier of the terminal from the Msg 3.

In an implementation, the terminal may directly include the identifier of the terminal in the Msg 3 (that is, it may be understood that the identifier of the terminal does not need to be padded), or the terminal may determine a first sequence based on the determined identifier of the terminal. A length of the first sequence is equal to the first length, and the terminal includes the first sequence in the Msg 3. Optionally, in addition to the identifier of the terminal, the first sequence may further include first data, the length of the identifier of the terminal and a length of the first data. A sum of the length of the identifier of the terminal and the length of the first data is equal to the first length. Alternatively, it may be described as follows: After determining the identifier of the terminal, the terminal may perform data padding on the identifier of the terminal based on first data, to determine the first sequence, where a length of the first sequence is the first length, and the terminal includes the first sequence in the Msg 3. According to a specification in a current protocol, the length of the identifier of the terminal carried in the Msg 3 is the first length. However, in this design, in consideration of reducing an amount of information during illegal communication caused by a Sparrow vulnerability, the length of the identifier of the terminal is set to be less than the first length. In addition, to meet the specification in the current protocol, the identifier of the terminal is padded by using the first data, to obtain the first sequence whose length is the first length, and the terminal includes, in the Msg 3, the first sequence whose length is the first length.

The foregoing design can further meet the specification of the length of the identifier of the terminal in the current protocol on the premise of reducing the amount of information in covert communication caused by the Sparrow vulnerability, and is compatible with the current protocol. Optionally, the first data may be preset data, or data received from the base station before the Msg 3. For example, before the Msg 3, the terminal may receive a Msg 2 from the base station, where the Msg 2 includes a TC-RNTI. The TC-RNTI may be used as the first data, and the TC-RNTI is used to pad the identifier of the terminal, to determine the first sequence, and the like. Specifically, for a rule for padding the identifier of the terminal by the terminal, a padding manner, and the like, refer to subsequent descriptions.

As shown in FIG. 3, this application provides a procedure of a communication method. The procedure includes at least the following steps.

Step 301: A base station sends a first broadcast message to a terminal.

The first broadcast message indicates a second length, and the second length is less than a first length. The first length is a length of an identifier of the terminal that is configured in the terminal before the terminal performs random access to a network. For example, when the terminal is powered on, the base station may notify the terminal of the first length by using a broadcast message, or the base station may periodically send a broadcast message to notify the terminal of the first length. Alternatively, the first length is a length of an identifier of a terminal specified in a protocol, or the first length is a length of an identifier of a terminal specified in a 4th generation mobile communication system long term evolution (long term evolution, LTE) system, or the first length is a length of an identifier of a terminal specified in a 5th generation mobile communication system new radio (new radio, NR) system. Optionally, the first length is 40 bits. The first broadcast message may be a system information block (system information block, SIB), for example, a SIB 1. Optionally, the identifier of the terminal may be represented by using a random number, the first broadcast message may be used to notify the terminal of a quantity N of bits of the random number that is in a random access Msg 3 and that represents the identifier of the terminal, and the quantity N of bits corresponds to the second length.

Optionally, before step 301, the method may further include: The base station determines the second length based on a network load. For example, in a scenario in which the network load is low, the base station considers that a probability of Msg 1 collision in a current network is low, and the terminal may identify an identity of the terminal by using a small quantity of bits. A value of the second length may be small. For example, the value of the second length may be 8 bits. Alternatively, in a scenario in which the network load is high, the base station considers that a probability of Msg 1 collision in a current network is high, and the terminal needs to use a large quantity of bits to identify an identity of the terminal. A value of the second length may be large, so as to prevent the terminal from selecting a same random number to represent the terminal. For example, the value of the second length may be 39 bits.

Step 302: The terminal sends a Msg 1 to the base station on a random access resource, where the Msg 1 includes a preamble.

Step 303: The base station sends a Msg 2 to the terminal, where the Msg 2 includes at least one of the following: a TA, an RA-RNTI, a TC-RNTI, and a UL grant for scheduling a Msg 3.

Step 301 to step 303 are optional.

Step 304: The terminal sends the Msg 3 to the base station, where the Msg 3 includes the identifier of the terminal.

In a design, the terminal may determine the identifier of the terminal based on the second length notified by the first broadcast message. The determined length of the identifier of the terminal may be equal to the second length, or less than the second length, or the like. For details, refer to the foregoing descriptions. Optionally, the identifier of the terminal may be a random number.

In a possible implementation, the Msg 3 directly includes the identifier of the terminal. The terminal may determine the N-bit random number based on the second length notified by the first broadcast message, where the N-bit random number indicates the identifier of the terminal, and a length corresponding to the N bits is less than or equal to the second length. In this implementation, the Msg 3 sent by the terminal to the base station includes the N-bit random number.

In another possible implementation, the Msg 3 includes a first sequence. In addition to determining the identifier of the terminal in the foregoing method, the terminal may further determine first data, and perform data padding on the identifier of the terminal based on the first data, to determine the first sequence. In addition to the identifier of the terminal, the first sequence further includes the first data. Optionally, the first data is preset data. For example, the preset data may be preset data for padding, and the preset data may also be referred to as fixed data or the like, or may be data received by the terminal from the base station before the Msg 3. This is not limited. In this implementation, the Msg 3 sent by the terminal to the base station includes the first sequence, and the first sequence includes the N-bit random number (namely, the identifier of the terminal) and the first data.

Specifically, the terminal may perform data padding on the identifier of the terminal based on the first data according to a data padding rule, and padded data is referred to as the first sequence. The data padding rule is not limited. For example, the first data is padded in a front location of the identifier of the terminal, or the first data is padded in a rear location of the identifier of the terminal, or the first data is padded in a middle location of the identifier of the terminal, or the first data is padded in the identifier of the terminal at an equal interval according to a rule. This is not limited. The data padding rule may be preset, or notified by a network device to the terminal in advance. For example, in addition to the second length, the first broadcast message may further notify the data padding rule and the like. For example, the first length is 40 bits, and the second length is a length corresponding to N bits.

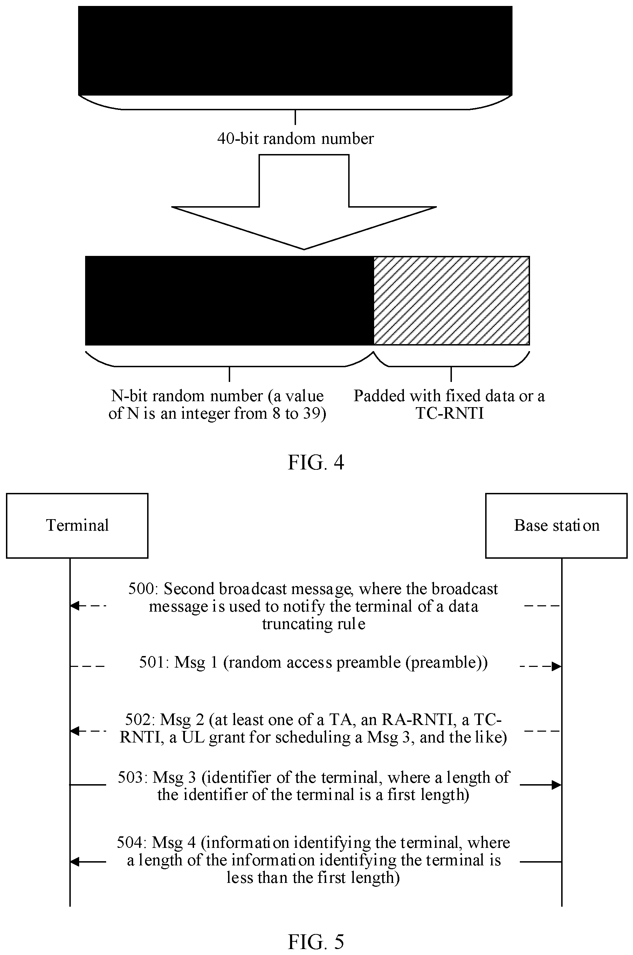

As shown in FIG. 4, in a current protocol, a 40-bit random number represents an identifier of a terminal. In this implementation, the N-bit random number represents the identifier of the terminal, and a value of N is a positive integer greater than or equal to 8 and less than or equal to 39. The terminal performs data padding on the N-bit random number based on the preset data or the TC-RNTI, and a length of the padded data is 40 bits. In FIG. 4, descriptions are provided by using an example in which the first data is filled in the rear location of the N-bit random number. According to a specification in a current protocol, the length of the identifier of the terminal in the Msg 3 is the first length. In this solution, although the length of the identifier of the terminal is reduced from a perspective of reducing an amount of information in covert communication caused by a Sparrow vulnerability, the length of the identifier of the terminal is padded to be the first length based on the preset data or data obtained from the base station in advance in the Msg 3, so that this solution is applicable to the specification in the current protocol and is compatible with the specification in the current protocol.

Step 305: The base station sends a Msg 4 to the terminal, where the Msg 4 includes information identifying the terminal, and a length of the information identifying the terminal is less than the first length. As described above, the information identifying the terminal may be the identifier of the terminal, or may be a part of data obtained through truncating the identifier of the terminal.

Optionally, in the procedure in FIG. 3, the length of the identifier of the terminal is the second length, and the information identifying the terminal is the identifier of the terminal or the part of data obtained through truncating the identifier of the terminal. Therefore, in the procedure in FIG. 3, the length of the information identifying the terminal is less than or equal to the second length.

When the information identifying the terminal is the identifier of the terminal, the foregoing Msg 3 may directly include the identifier of the terminal, or include the first sequence. In this application, when receiving the Msg 3, the base station may directly obtain information included in the Msg 3, and the obtained information may be the identifier of the terminal or the first sequence. The base station broadcasts the Msg 4 in plaintext, where the Msg 4 includes the information obtained from Msg 3. For example, the Msg 4 includes a contention resolution identity, and the contention resolution identity includes the information obtained from the Msg 3, that is, the contention resolution identity includes the identifier of the terminal. Because the Msg 4 is a broadcast message, the terminal in a service range of the Msg 4 may receive the Msg 4, and the terminal may obtain information carried in the Msg 4. The terminal compares the information obtained from the Msg 4 with the information included in the Msg 3 by the terminal. If the information is the same, it may be considered that random access of the terminal succeeds; or if the information is different, it may be considered that random access of the terminal fails. Optionally, for the terminal that fails in random access, the terminal may re-initiate a random access process. For example, the first length is 40 bits, and the second length is N bits. In this design, after receiving the Msg 4, the Sparrow attack receiving end may reduce bits transmitted by using stealth information from 40 bits to N bits. This reduces information bits that can be used by an attacker for stealth transmission, and reduces a value for the attacker to exploit a vulnerability.

When the information identifying the terminal is the part of data in the identifier of the terminal, similarly, the foregoing Msg 3 may directly include the identifier of the terminal, or include the first sequence, where the first sequence includes the identifier of the terminal and the first data. When receiving the Msg 3, the base station may obtain the identifier of the terminal from the Msg 3. The part of the data is obtained through truncating the identifier of the terminal. For descriptions of the part of data obtained through truncating, refer to the following descriptions in FIG. 5. For example, the Msg 4 includes a contention resolution identity, and the contention resolution identity includes M^{th} to (M+K)^{th} bits of data obtained through truncating the identifier of the terminal in the Msg 3.

The base station broadcasts the Msg 4 in plaintext, and the Msg 4 carries the part of data obtained through truncating. Optionally, the Msg 4 may directly carry the part of data. Alternatively, the base station may pad the part of data obtained through truncating, to determine a second sequence, where a length of the second sequence is equal to the first length. The Msg 4 carries the second sequence. In this design, the part of data is carried in the Msg 4, and a length of the part of data is less than the second length. This further reduces an information bit used by the Sparrow attacker to transmit information in a stealth manner.

It should be noted that the foregoing focuses on a process in which the Msg 3 or the Msg 4 carries identifier-related data of the terminal. In a design, the Msg 3 or the Msg 4 carries two parts of data. One part of data is identifier-related data of the terminal, and the other part of data is a service type identifier. A size of the service type identifier may be 8 bits. Optionally, in this application, in addition to the identifier-related data of the terminal, the Msg 3 or the Msg 4 may further include the service type identifier.

In this application, in a random access process, the terminal sends the Msg 3 to the base station, and the base station broadcasts data in the received Msg 3 in plaintext by using the Msg 4. As a result, the vulnerability in a covert communication attack in the random access process exists. For example, when an attacker terminal A is far away from an attacker terminal B, the terminal A may send information having a preset meaning to the base station in the Msg 3. After receiving and correctly decoding the Msg 3 from the terminal A, the base station broadcasts, in plaintext by using the Msg 4, the information that is included in the Msg 3 by the terminal A and that has the preset meaning. After receiving the Msg 4 that is broadcast in plaintext, the terminal B may obtain the information that has the preset meaning and that is sent by the terminal A, so as to implement communication between the terminal A and the terminal B. However, in the foregoing process, communication between the terminal A and the terminal B is performed in stealth, and the base station cannot learn of the communication. As a result, communication between the terminal A and the terminal B is illegal. In a design, a length of the data (namely, the identifier of the terminal) included in the Msg 3 by the terminal is the first length. In the foregoing illegal communication scenario, an illegal attack receiving end may obtain, by using the Msg 4, a data amount corresponding to the data of the first length. However, in this design, the base station notifies, by using the first broadcast message, the terminal that the length of the identifier of the terminal, that is, the length of the data included in the Msg 3 by the terminal is the second length, and the second length is less than the first length. The base station may broadcast the data of the second length in plaintext by using the Msg 4, or further perform data truncating on second data to obtain the part of data, and broadcast the part of data in plaintext by using the Msg 4. According to the solution of this application, in the foregoing illegal communication scenario, data that can be obtained by the illegal attack receiving end by using the Msg 4 is less than data corresponding to the first length. This reduces the information bit in covert communication in the random access process, and reduces the value for the attacker to exploit the vulnerability.

This application further provides another solution for the Sparrow attack, including: A terminal determines an identifier of the terminal, where a length of the identifier of the terminal is equal to a first length. The terminal sends a Msg 3 in a random access process to a base station, where the Msg 3 includes the identifier of the terminal. The base station obtains the identifier of the terminal of the first length from the Msg 3, and truncates the identifier of the terminal to obtain a part of data, where the part of data may be used as information identifying the terminal.

The base station sends a Msg 4 to the terminal, where the Msg 4 carries the part of data, and a length of the part of data is less than the first length. For example, the first length is 40 bits. In this solution, an information amount of meaningful information obtained by an illegal attacker by using the Msg 4 in the random access process is less than 40 bits. This reduces an amount of information in covert communication caused by the Sparrow vulnerability.

### Embodiment 2

In Embodiment 2, a terminal may determine an identifier of the terminal based on a first length, and a length of the identifier of the terminal may be the first length. The terminal sends a Msg 3 in a random access process to a base station, where the Msg 3 includes the identifier of the terminal whose length is the first length. When obtaining the identifier of the terminal from the Msg 3, the base station truncates the identifier of the terminal to obtain a part of data. The base station sends a Msg 4 to the terminal, where the Msg 4 directly includes the part of data obtained through truncating (that is, it may be understood that the identifier of the terminal does not need to be padded), or the Msg 4 includes a second sequence, the second sequence includes the part of data obtained through truncating, and a length of the second sequence is equal to the first length. Optionally, the second sequence may further include second data. The second data may be preset data, or may be sent to the terminal before the message 4. For example, the second data is a TC-RNTI carried in a Msg 2 in the random access process.

As shown in FIG. 5, this application provides a procedure of a communication method. The procedure includes at least the following steps.

Step 500: A base station sends a second broadcast message to a terminal.

The second broadcast message may not include information indicating a second length, and the second length is less than a first length. For the first length, refer to the descriptions in FIG. 3.

Optionally, the second broadcast message may be a SIB, for example, a SIB 1.

Step 501: The terminal sends a Msg 1 to the base station, where the Msg 1 includes a preamble.

Step 502: The base station sends a Msg 2 to the terminal, where the Msg 2 includes at least one of the following: a TA, an RA-RNTI, a TC-RNTI, and a UL grant for scheduling a Msg 3.

Step 500 to step 502 are optional.

Step 503: The terminal sends the Msg 3 to the base station, where the Msg 3 includes an identifier of the terminal.

For example, the terminal determines the identifier of the terminal based on the first length, where a length of the identifier of the terminal may be the first length, and the identifier of the terminal may be a random number.

Step 504: The base station sends a Msg 4 to the terminal, where the Msg 4 includes information identifying the terminal, and a length of the information identifying the terminal is less than a first length.

In a design, after obtaining the identifier of the terminal from the Msg 3, the base station may obtain a part of data in the identifier of the terminal through truncating according to a data truncating rule. The data truncating rule includes a location of data obtained through truncating, a length of data obtained through truncating, or the like. The data truncating rule may be preset or determined by the base station based on a load status of a current network. For example, the base station may determine the length of the data obtained through truncating based on a network load, where the length of the data obtained through truncating is a length of the part of data obtained through truncating. For example, the data truncating rule may be truncating the identifier of the terminal to obtain M^{th} to (M+K)^{th} bits of data, where M and K are positive integers greater than 0, M represents a start bit of the data obtained through truncating the identifier of the terminal, and K represents the length of the data obtained through truncating the identifier of the terminal, namely, the length of the part of data obtained through truncating. For example, in a scenario in which a network load is low, the base station may consider that a probability of Msg 1 collision in the current network is low, and a probability of selecting a same random number in the Msg 3 by a plurality of terminals is very low. Therefore, K may be set to a small value. In a scenario in which a network load is high, the base station considers that a probability of Msg 1 collision in the current network is high. Terminals need to use a large quantity of random numbers in the Msg 3 to identify identities of the terminals and a quantity of bits of the message, in the Msg 3, returned by the base station in the Msg 4 needs to be increased. Therefore, K may be set to a large value. Optionally, the Msg 4 may include a contention resolution identity, and the contention resolution identity includes M^{th} to (M+K)^{th} bits of data obtained through truncating the identifier of the terminal in the Msg 3.

Optionally, the base station may send indication information of the data truncating rule to the terminal, where the data truncating rule may indicate at least one of the following: a location of data obtained through truncating, a length of data obtained through truncating, or the like. The data truncating rule may explicitly or implicitly indicate at least one of the location of the data obtained through truncating, the length of the data obtained through truncating, or the like. In a possible implementation, the data truncating rule may explicitly indicate at least one of the location of the data obtained through truncating, the length of the data obtained through truncating, or the like. In this case, the data truncating rule may be described as including at least one of the location of the data obtained through truncating, the length of the data obtained through truncating, or the like. For example, the base station may notify the terminal of the data truncating rule by using the second broadcast message in step 500. For example, the second broadcast message may include the indication information of the data truncating rule.

In a possible implementation, the Msg 4 directly includes the part of data obtained through truncating. When receiving and correctly decoding the Msg 4, the terminal may obtain the part of data in the Msg 4. The terminal determines, according to the data truncating rule, a second part of data in a locally generated identifier of the terminal, where the identifier of the terminal locally generated by the terminal is the identifier of the terminal that is sent by the terminal to the base station in the Msg 3. The terminal verifies, based on the second part of data, the part of data included in the Msg 4. For example, if the second part of data is the same as the part of data received in the Msg 4, it is considered that random access of the terminal succeeds; or if the second part of data is different from the part of data received in the Msg 4, it is considered that random access of the terminal fails. The data truncating rule is preset, or is received by the terminal from the base station. For a process in which the base station sends the data truncating rule to the terminal, refer to the foregoing descriptions. The foregoing example is still used. The data truncating rule may be truncating the identifier of the terminal to obtain the M^{th} to (M+K)^{th} bits of the data. The terminal may truncate, according to the data truncating rule, the locally generated identifier of the terminal to obtain the M^{th} to (M+K)^{th} bits of data as the second part of data.

In another possible implementation, after obtaining the part of data obtained through truncating, the base station may perform, based on the second data, data padding on the part of data obtained through truncating, to determine a second sequence. **In** addition to the foregoing part of data obtained through truncating, the second sequence further includes second data, and a length of the second sequence is the first length. A rule for performing, based on the second data, data padding on the part of data obtained through truncating is not limited. For example, the second data may be padded in a front location of the part of data obtained through truncating, or the second data may be padded in a rear location of the part of data obtained through truncating, or the second data may be padded in a middle location of the part of data obtained through truncating, or the second data may be padded in the part of data obtained through truncating at an equal interval. This is not limited. The rule for performing data padding on the part of data obtained through truncating may be predetermined, or may be notified by the base station to the terminal, or the like. This is not limited. For example, the base station may notify, by using the second broadcast message in step 500, the terminal of the rule for performing data padding on the part of data obtained through truncating. The Msg 4 sent by the base station to the terminal includes the second sequence. In the foregoing design in which the second sequence is carried in the Msg 4 and the length of the second sequence is the first length, to reduce an amount of information in covert communication caused by the Sparrow attack, the part of data carried in the Msg 3 is broadcast in plaintext in the Msg 4. In addition, to meet a requirement of the Msg 4 in a current protocol, the length of the part of data is padded with the first length specified in the protocol. This is compatible with the current protocol.

A manner in which the terminal verifies the second sequence when receiving the Msg 4 includes:
The terminal determines the part of data obtained through truncating the second sequence according to the data truncating rule; and the terminal determines a first part of data in the local identifier of the terminal according to the data truncating rule. Optionally, the data truncating rule may be preset, or may be notified by the base station to the terminal in advance, or the like. This is not limited. The terminal verifies, based on the first part of data, the part of data obtained through truncating the second sequence. For example, if the two parts of data are the same, it is considered that random access of the terminal succeeds; or if the two parts of data are different, it is considered that random access of the terminal fails. For example, the data truncating rule is obtaining the M^{th} to (M+K)^{th} bits of data in the identifier of the terminal through truncating. When obtaining the identifier of the terminal from the Msg 3, the base station truncates the identifier of the terminal to obtain the M^{th} to (M+K)^{th} bits of data, and the M^{th} to (M+K)^{th} bits of data obtained through truncating are referred to as the part of data. 1^{st} to (M-1)^{th} bits and (M+K+1)^{th} to (first length)^{th} bits of the part of data are padded with preset data or a TC-RNTI, and the padded data is referred to as the second sequence.

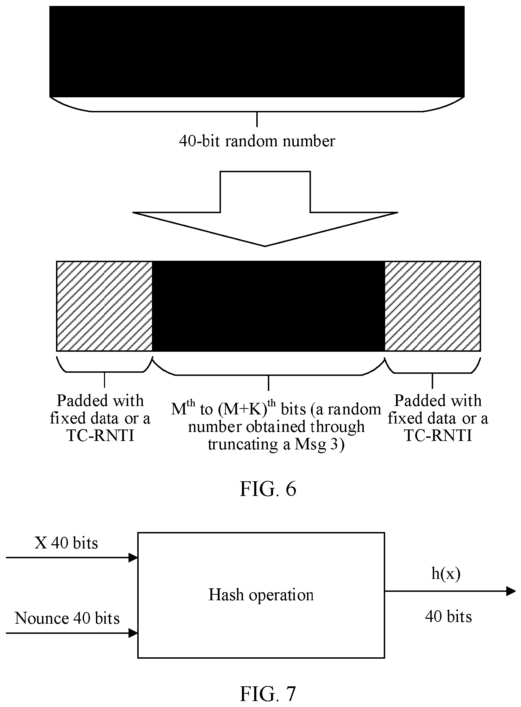

For example, as shown in FIG. 6, a first length is 40 bits. In a current solution, a Msg 4 includes a 40-bit random number, and the 40-bit random number represents an identifier of a terminal. However, in this application, the Msg 4 includes the second sequence, and the length of the second sequence is also 40 bits. In the 40 bits, 1^{st} to (M-1)^{th} bits are padded data, M^{th} to (M+K)^{th} bits are a random number obtained through truncating the Msg 3, and (M+K+1)^{th} to 40^{th} bits are padded data. The padded data may be fixed data, a TC-RNTI, or the like. When receiving the second sequence in the Msg 4, the terminal truncates the second sequence to obtain the part of data in the M^{th} to (M+K)^{th} bits. In the local identifier of the terminal, data in the M^{th} to (M+K)^{th} bits is obtained through truncating, and the data obtained through truncating is referred to as the first part of data. The part of data obtained through truncating the second sequence is verified based on the first part of data. If the first part of data is the same as the part of data obtained through truncating the second sequence, it is considered that random access of the terminal succeeds; or if the first part of data is different from the part of data obtained through truncating the second sequence, it is considered that random access of the terminal fails.

Alternatively, the terminal performs data truncating on the local identifier of the terminal according to the data truncating rule, and the part of data obtained through truncating is referred to as a third part of data. Then, the terminal performs data padding on the third part of data according to a data padding rule, to determine a third sequence. The data truncating rule and the data padding rule may be preset, or may be notified by the base station to the terminal in advance. This is not limited. The terminal verifies the second sequence in the Msg 4 based on the third sequence. If the third sequence is the same as the second sequence, it is considered that random access of the terminal succeeds; or if the third sequence and the second sequence are different, it is considered that random access of the terminal fails. The foregoing example is still used, and the first length is 40 bits. The terminal may first obtain the part of data for the local identifier through truncating in the manner shown in FIG. 6, and then pad the part of data obtained through truncating based on the preset data or the TC-RNTI, to obtain the third sequence. The third sequence is used to verify the second sequence obtained in the Msg 4.

According to the foregoing design, after receiving the Msg 4, the illegal receiving end of the Sparrow attack can reduce bits that can be used to transmit stealth information from bits corresponding to the identifier of the terminal to bits corresponding to the part of data in the identifier of the terminal. This reduces information bits that can be used by the attacker for stealth transmission, and reduces the amount of covert communication information that can be obtained by the attacker.

In a design, in a scenario in which collision occurs during random access of a plurality of terminals, the plurality of terminals each send a Msg 3 to the base station based on UL grant scheduling in a Msg 2, where each Msg 3 includes an identifier of a corresponding terminal, and the Msg 3 sent by each of the plurality of terminals collides with each other over an air interface, and the base station can correctly decode only one Msg 3. The identifier of the terminal is obtained from the correctly decoded Msg 3, and information identifying the terminal is broadcast in plaintext by using the Msg 4. The terminal within a service range of the base station may receive the Msg 4, and each terminal verifies, based on the identifier of the terminal sent by the terminal in the Msg 3, the information identifying the terminal obtained in the Msg 4. If the verification succeeds, it is considered that the random access of the terminal succeeds; or if the verification fails, it is considered that the random access of the terminal fails. From a perspective of each terminal, the terminal sends the identifier of the terminal in the Msg 3. The information identifying the terminal received in the Msg 4 may be information identifying the terminal or information identifying another terminal. For ease of differentiation, the solution in the foregoing embodiment may also be described as follows: The first terminal determines the identifier of the first terminal; the first terminal sends the Msg 3 in the random access process to the base station, where the Msg 3 includes the identifier of the first terminal, and the length of the identifier of the first terminal is less than or equal to the first length; and the first terminal receives the Msg 4 in the random access process from the base station, where the Msg 4 includes information identifying a second terminal, and a length of the information identifying the second terminal is less than the first length. Optionally, the second terminal is the same as or different from the first terminal. For example, in a contention-based random access process, if a terminal A and a terminal B select a same random access resource and send a same preamble, it is considered that collision occurs between the terminal A and the terminal B in the random access process. The terminal A and the terminal B each may send a Msg 3 to a base station based on UL grant scheduling in a Msg 2. If the base station correctly decodes the Msg 3 sent by the terminal A, a Msg 4 carries information identifying the terminal A; or if the base station correctly decodes the Msg 3 sent by the terminal B, a Msg 4 carries information identifying the terminal B. From a perspective of the terminal A, information identifying a terminal obtained by the terminal A by using the Msg 4 may be information identifying the terminal A, that is, the information identifying the terminal A, or may be information identifying another terminal, for example, information identifying the terminal B.

This application further provides another solution for the Sparrow attack. In this solution, after a base station obtains an identifier of a terminal carried in a Msg 3, the base station selects a random number Nounce as a salt value based on the identifier of the terminal, where the salt value is a random value additionally added in a hash operation process. The base station performs a hash operation based on the identifier of the terminal and Nounce, and truncates a hash operation result to obtain a part of a hash value. The hash value obtained through truncating and the salt value Nounce are broadcast in plaintext in a Msg 4, that is, a Msg 4 includes the hash value obtained through truncating and Nounce. For example, in an implementation, as shown in FIG. 7, lengths of both Nounce and the identifier of the terminal are 40 bits. The base station performs the hash operation on the 40-bit Nounce and the 40-bit identifier of the terminal, and truncates the hash operation result h(x) to obtain 40-bit data. The base station broadcasts, in plaintext by using the Msg 4, Nounce and the 40-bit data obtained through truncating the hash operation result. When receiving the Msg 4, the terminal performs the hash operation on Nounce included in the Msg 4 and the locally generated identifier of the terminal, and truncates a hash operation result to obtain a part of a hash value. The terminal compares the part of the hash value obtained locally through truncating with the part of the hash value received by using the Msg 4. If the two parts are the same, it is considered that random access of the terminal succeeds; or if the two parts are different, it is considered that random access of the terminal fails. In this design, the base station no longer broadcasts, in plaintext, the information received in the Msg 3, but broadcasts, in plaintext, the hash operation result and Nounce that are determined based on the information received from the Msg 3 and Nounce. Theoretically, for the illegal receiving end of the Sparrow attack, it is difficult to reversely deduce the information carried in Msg 3 based on the hash operation result and Nounce carried in the Msg 4. This resolves a problem of covert communication caused by the Sparrow vulnerability.

However, in this solution, the base station needs to additionally notify the terminal of Nounce by using the Msg 4. This increases air interface overheads of the Msg 4. For example, a terminal contention resolution identity in the Msg 4 has only 48 bits in a current protocol definition. Among the 48 bits, 40 bits are for transmitting information received in the Msg 3, and the remaining 8 bits are service type identifiers. However, in a hash solution shown in FIG. 7, the length of the hash value obtained through truncating and the length of a Nounce value are both 40 bits. The hash value obtained through truncating may be set in an information bit corresponding to the 40 bits of the terminal contention resolution identity in the Msg 4. A 40-bit information bit needs to be added in the Msg 4 to transmit Nounce. This increases the air interface overheads of the Msg 4.

In this application, the solution is improved as follows: Before the Msg 4, the base station notifies the terminal of first data used as Nounce. The base station performs a hash operation based on the first data and the identifier of the terminal received in the Msg 3, and truncates a hash operation result to obtain a part of a hash value. The base station notifies, in the Msg 4, the terminal of the part of the hash value obtained through truncating and does not notify Nounce in the Msg 4. This reduces the air interface overheads of Msg 4.

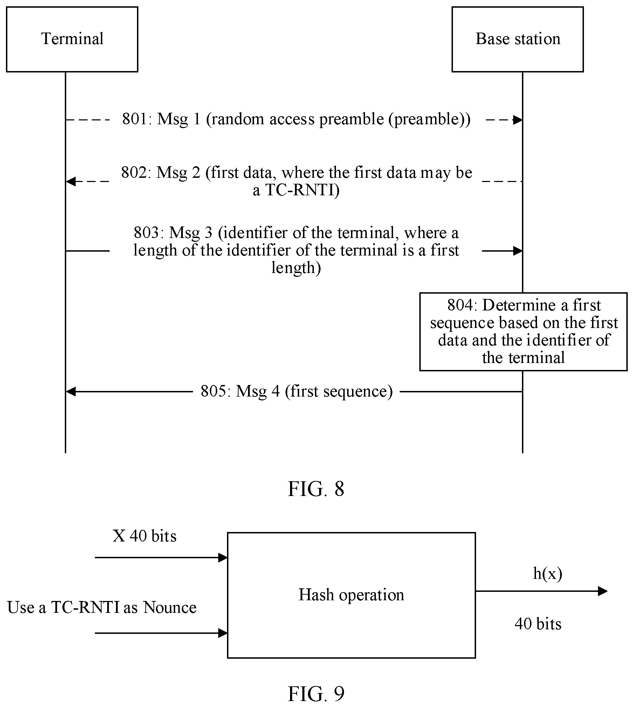

As shown in FIG. 8, this application provides a procedure of a communication method. The procedure includes at least the following steps.

Step 801: A terminal sends a Msg 1 to a base station to start a random access process. Step 801 is optional.

Step 802: The base station sends a Msg 2 to the terminal, where the Msg 2 includes first data. Optionally, the first data may be a TC-RNTI, the TC-RNTI is generated by the base station, and a length of the TC-RNTI is 16 bits. Alternatively, the first data may be random data except a TC-RNTI. This is not limited.

Step 803: The terminal sends a Msg 3 to the base station, where the Msg 3 includes an identifier of the terminal, and a length of the identifier of the terminal is a first length. For the first length, refer to the descriptions of the procedure shown in FIG. 3.

Step 804: The base station determines a first sequence based on the first data and the identifier of the terminal.

For example, the base station may perform a hash operation on the identifier of the terminal and the first data, to determine a hash value, where the hash value is a hash operation result; and obtain the hash value through truncating according to a hash value truncating rule, to obtain the first sequence. Optionally, a length of the first sequence may be the same as that of the identifier of the terminal, and is the first length. For example, the first length is 40 bits. The hash value truncating rule may include at least one of a length of data obtained through truncating, a location of data obtained through truncating, or the like. The length of the data obtained through truncating may be the first length. The location of the data obtained through truncating may be data, obtained through truncating, of the first length at a front location of the hash operation result, or data, obtained through truncating, of the first length at a rear location of the hash operation result, or data, obtained through truncating, of the first length at a middle location of the hash operation result, or the like. This is not limited.

For example, when receiving the Msg 3, the base station obtains the identifier of the terminal from the Msg 3, and the length of the identifier of the terminal is 40 bits. As shown in FIG. 9, X may represent the identifier of the terminal, and the TC-RNTI received in the Msg 2 is used as a hash Nounce salt value. The base station performs the hash operation on the identifier of the terminal and the TC-RNTI to obtain the hash value h(x). Because a length of the obtained hash value h(x) is usually long, the hash value h(x) generally needs to be obtained through truncating. For example, 40-bit data may be obtained through truncating h(x), and the data obtained through truncating may be referred to as the first sequence.

Step 805: The base station sends a Msg 4 to the terminal, where the Msg 4 includes the first sequence.

In a solution, a contention resolution identity in the Msg 4 may include the first sequence, and a length of the first sequence is 40 bits. In addition to the first sequence, the contention resolution identity may further include an 8-bit service type identifier.

When receiving the Msg 4, the terminal may perform a hash operation on a locally generated identifier of the terminal and the received first data, to determine a hash value; and obtain the hash value through truncating according to the hash value truncating rule. The hash value truncating rule may be predefined, or may be notified by the base station to the terminal. For example, the base station may send indication information of the hash value truncating rule to the terminal, where the indication information of the hash value truncating rule indicates at least one of the following: a length of data obtained through truncating, a location of data obtained through truncating, or the like. The terminal may verify the first sequence based on the hash value obtained locally through truncating. For example, if the hash value obtained by the terminal locally through truncating is the same as the first sequence, random access of the terminal succeeds; or if the hash value obtained by the terminal locally through truncating is different from the first sequence, random access of the terminal fails.

According to the foregoing solution, because information received from the Msg 3 is no longer broadcast in plaintext in the Msg 4, but the first sequence determined based on the information received from the Msg 3 is broadcast in plaintext, for a receiving end of a Sparrow attack, it is difficult to reversely deduce, based on the first sequence carried in the Msg 4, the information carried in the Msg 3. This resolves a problem of covert communication caused by a Sparrow vulnerability. Further, because the Msg 4 carries only the 40-bit first sequence. This can reduce air interface overheads, minimize impact on a current network, and is more compatible with the current network.

It should be noted that, in the procedure shown in FIG. 8, from a perspective of the terminal, the Msg 3 sent by the terminal to the base station carries the identifier of the terminal. The Msg 3 correctly decoded by the base station may be sent by the terminal or sent by another terminal. For ease of description, the foregoing process may be described as follows: A first terminal sends a Msg 3 to a base station, where the Msg 3 carries an identifier of the first terminal. The Msg 3 correctly decoded by the base station carries an identifier of a second terminal, and the identifier of the second terminal is the same as or different from the identifier of the first terminal. The base station performs a hash operation on the identifier of the second terminal and first data, to obtain a hash value; and truncates the hash value according to a hash value truncating rule, to obtain a first sequence. The base station sends a Msg 4 to the first terminal, where the Msg 4 carries the first sequence. The first sequence carried in the Msg 4 received by the first terminal is determined based on the identifier of the second terminal and the first data. The first terminal performs the hash operation on the identifier of the first terminal and the first data, to determine a hash value; truncates the determined hash value according to the hash value truncating rule; and verifies the first sequence based on a hash value obtained through truncating. For example, if the hash value obtained by the first terminal through truncating is the same as the first sequence, it is considered that random access of the first terminal succeeds; or if the hash value obtained by the first terminal through truncating is different from the first sequence, it is considered that random access of the first terminal fails.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application may be implemented by hardware or a combination of hardware and computer software. Whether a function is performed by hardware or hardware driven by computer software depends on particular application scenarios and design constraint conditions of the technical solutions.

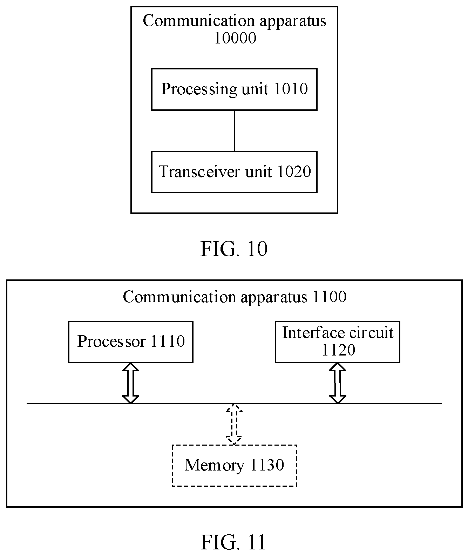

FIG. 10 and FIG. 11 each are a diagram of a possible structure of a communication apparatus according to an embodiment of this application. These communication apparatuses may be configured to implement the function of the terminal or the base station in the foregoing method embodiment, and therefore can also achieve beneficial effect of the foregoing method embodiment. In this embodiment of this application, the communication apparatus may be one of the terminals 120a to 120j shown in FIG. 1, or may be the base station 110a or 110b shown in FIG. 1, or may be a unit (for example, a chip) used in the terminal or the base station.

As shown in FIG. 10, the communication apparatus 10000 includes a processing unit 1010 and a transceiver unit 1020. The communication apparatus 10000 is configured to implement a function of the terminal or the base station in the method embodiment shown in FIG. 3, FIG. 5, or FIG. 8.

When the communication apparatus 10000 is configured to implement the function of the terminal in the method embodiment shown in FIG. 3 or FIG. 5, the processing unit 1010 is configured to determine an identifier of a first terminal, where a length of the identifier of the first terminal is less than or equal to a first length, and the first length is configured in the first terminal before the first terminal performs random access to a network; and the transceiver unit 1020 is configured to: send a message 3 in a random access process to a network device, where the message 3 includes the identifier of the first terminal; and receive a message 4 in the random access process from the network device, where the message 4 includes information identifying a second terminal, and a length of the information identifying the second terminal is less than the first length.

When the communication apparatus 10000 is configured to implement the function of the base station in the method embodiment shown in FIG. 3 or FIG. 5, the transceiver unit 1020 is configured to: receive a message 3 in a random access process from a terminal, where the message 3 includes an identifier of the terminal, a length of the identifier of the terminal is less than or equal to a first length, and the first length is configured in the terminal before the terminal performs random access to a network; and send a message 4 in the random access process to the terminal, where the message 4 includes information identifying the terminal, and a length of the information identifying the terminal is less than the first length. Optionally, the processing unit 1010 is configured to: process the message 3, generate the message 4, and the like.

When the communication apparatus 10000 is configured to implement the function of the terminal in the method embodiment shown in FIG. 8, the transceiver unit 1020 is configured to: receive a message 2 in a random access process from a network device, where the message 2 includes first data; send a message 3 in the random access process to the network device, where the message 3 includes an identifier of a first terminal; and receive a message 4 in the random access process from the network device, where the message 4 includes a first sequence, and the first sequence is determined based on the first data and an identifier of a second terminal; and the processing unit 1010 is configured to verify the first sequence based on the identifier of the first terminal and the first data.

When the communication apparatus 10000 is configured to implement the function of the base station in the method embodiment shown in FIG. 8, the transceiver unit 1020 is configured to: send a message 2 in a random access process to a terminal, where the message 2 includes first data; and receive a message 3 in the random access process from the terminal, where the message 3 includes an identifier of the terminal; and the processing unit 1010 is configured to determine a first sequence based on the first data and the identifier of the terminal. The transceiver unit 1020 is further configured to send a message 4 in the random access process to the terminal, where the message 4 includes the first sequence.

For more detailed descriptions of the processing unit 1010 and the transceiver unit 1020, directly refer to related descriptions in the method embodiments shown in FIG. 3, FIG. 5, and FIG. 8, and details are not described herein again.

As shown in FIG. 11, the communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130, configured to: store instructions executed by the processor 1110, or store input data required by the processor 1110 to run the instructions, or store data generated after the processor 1110 runs the instructions.

When the communication apparatus 1100 is configured to implement the method shown in FIG. 3, FIG. 5, or FIG. 8, the processor 1110 is configured to implement a function of the foregoing processing unit 1010, and the interface circuit 1120 is configured to implement a function of the foregoing transceiver unit 1020.

When the communication apparatus is a chip used in a terminal, the chip in the terminal implements a function of the terminal in the foregoing method embodiments. The chip in the terminal receives information from another unit (for example, a radio frequency unit or an antenna) in the terminal, where the information is sent by a base station to the terminal; or the chip in the terminal sends information to another unit (for example, a radio frequency unit or an antenna) in the terminal, where the information is sent by the terminal to a base station.

When the communication apparatus is a unit used in a base station, the unit in the base station implements a function of the base station in the foregoing method embodiments. The unit in the base station receives information from another unit (for example, a radio frequency unit or an antenna) in the base station, where the information is sent by a terminal to the base station; or the unit in the base station sends information to another unit (for example, a radio frequency unit or an antenna) in the base station, where the information is sent by the base station to a terminal. The unit in the base station herein may be a baseband chip in the base station, or may be a DU or another unit. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining an identifier of a first terminal, wherein a length of the identifier of the first terminal is less than or equal to a first length, and the first length is configured in the first terminal before the first terminal performs random access to a network;
sending a message 3 in a random access process to a network device, wherein the message 3 comprises the identifier of the first terminal; and
receiving a message 4 in the random access process from the network device, wherein the message 4 comprises information identifying a second terminal, and a length of the information identifying the second terminal is less than the first length.

2. The method according to claim 1, wherein the method further comprises: receiving a first broadcast message from the network device, wherein the first broadcast message comprises information indicating a second length, and the second length is less than the first length; and
the determining an identifier of a first terminal comprises: determining the identifier of the first terminal based on the second length.

3. The method according to claim 2, wherein the message 3 comprises a first sequence, the first sequence comprises the identifier of the first terminal, and a length of the first sequence is equal to the first length.

4. The method according to claim 3, wherein the first sequence further comprises first data, and the first data is preset data, or the first data is data received from the network device before the message 3.

5. The method according to claim 4, wherein the first data is the data received from the network device before the message 3, and the method further comprises:
receiving a message 2 in the random access process from the network device, wherein the message 2 comprises the first data, and the first data is a temporary cell radio network temporary identity.

6. The method according to any one of claims 2 to 5, further comprising:
verifying, based on the identifier of the first terminal, the information identifying the second terminal, wherein the information identifying the second terminal is an identifier of the second terminal.

7. The method according to claim 1, further comprising:
receiving a second broadcast message from the network device, wherein the second broadcast message does not comprise information indicating a second length, and the second length is less than the first length; and
the determining an identifier of a first terminal comprises: determining the identifier of the first terminal based on the first length.

8. The method according to any one of claims 1 to 7, wherein the message 4 comprises a second sequence, the second sequence comprises the information identifying the second terminal, and a length of the second sequence is equal to the first length.

9. The method according to claim 8, wherein the second sequence further comprises second data, and the second data is preset data, or the second data is data received from the network device before the message 4.

10. The method according to claim 9, wherein the second data is the data received from the network device before the message 4, and the method further comprises:
receiving the message 2 in the random access process from the network device, wherein the message 2 comprises the second data, and the second data is a temporary cell radio network temporary identity.

11. The method according to claim 1 or 7, wherein the method further comprises:
determining, in the second sequence according to a data truncating rule, the information identifying the second terminal, and determining a first part of data in the identifier of the first terminal, wherein the information identifying the second terminal is a part of data in an identifier of the second terminal; and
verifying, based on the first part of data, the information identifying the second terminal.

12. The method according to any one of claims 1 to 7, further comprising:
determining a second part of data in the identifier of the first terminal according to a data truncating rule; and
verifying, based on the second part of data, the information identifying the second terminal comprised in the message 4, wherein the information identifying the second terminal is a part of data in the identifier of the second terminal.

13. The method according to any one of claims 1 to 12, wherein the first length is 40 bits.

14. A communication method, comprising:
receiving a message 3 in a random access process from a terminal, wherein the message 3 comprises an identifier of the terminal, a length of the identifier of the terminal is less than or equal to a first length, and the first length is configured in the terminal before the terminal performs random access to a network; and
sending a message 4 in the random access process to the terminal, wherein the message 4 comprises information identifying the terminal, and a length of the information identifying the terminal is less than the first length.

15. The method according to claim 14, wherein the method further comprises:
sending a first broadcast message to the terminal, wherein the first broadcast message comprises information indicating a second length, the second length is less than the first length, and the length of the identifier of the terminal is determined based on the second length.

16. The method according to claim 15, wherein before the sending a first broadcast message to the terminal, the method further comprises:
determining the second length based on a network load.

17. The method according to claim 15 or 16, wherein the message 3 comprises a first sequence, the first sequence comprises the identifier of the terminal, and a length of the first sequence is equal to the first length.

18. The method according to claim 17, wherein the first sequence further comprises first data, and the first data is preset data, or the first data is data sent to the terminal before the message 3.

19. The method according to claim 18, wherein the first data is the data sent to the terminal before the message 3, and the method further comprises:
sending a message 2 in the random access process to the terminal, wherein the message 2 comprises the first data, and the first data is a temporary cell radio network temporary identity.

20. The method according to claim 14, wherein the method further comprises:
sending a second broadcast message to the terminal, wherein the second broadcast message does not comprise information indicating a second length, the second length is less than the first length, and the length of the identifier of the terminal is equal to the first length.

21. The method according to any one of claims 14 to 20, wherein the message 4 comprises a second sequence, the second sequence comprises the information identifying the terminal, and a length of the second sequence is equal to the first length.

22. The method according to claim 21, wherein the second sequence further comprises second data, and the second data is preset data, or the second data is data sent to the terminal before the message 4.

23. The method according to claim 22, wherein the second data is the data sent to the terminal before the message 4, and the method further comprises:
sending the message 2 in the random access process to the terminal, wherein the message 2 comprises the second data, and the second data is a temporary cell radio network temporary identity.

24. The method according to any one of claims 14 to 23, further comprising:
determining, based on the network load, the length of the information identifying the terminal.

25. The method according to any one of claims 14 to 24, wherein the first length is 40 bits.

26. A communication apparatus, comprising a unit configured to perform the method according to any one of claims 1 to 13.

27. A communication apparatus, comprising a processor and an interface circuit, wherein the interface circuit is configured to: receive a signal from a communication apparatus other than the communication apparatus and transmit the signal to the processor or send a signal from the processor to a communication apparatus other than the communication apparatus, and the processor is configured to implement the method according to any one of claims 1 to 13 through a logic circuit or by executing code instructions.

28. A communication apparatus, comprising a processor and a memory, wherein
the processor is configured to execute a computer program or instructions stored in the memory, so that the communication apparatus implements the method according to any one of claims 1 to 13.

29. A communication apparatus, comprising a unit configured to perform the method according to any one of claims 14 to 25.

30. A communication apparatus, comprising a processor and an interface circuit, wherein the interface circuit is configured to: receive a signal from a communication apparatus other than the communication apparatus and transmit the signal to the processor or send a signal from the processor to a communication apparatus other than the communication apparatus, and the processor is configured to implement the method according to any one of claims 14 to 25 through a logic circuit or by executing code instructions.

31. A communication apparatus, comprising a processor and a memory, wherein
the processor is configured to execute a computer program or instructions stored in the memory, so that the communication apparatus implements the method according to any one of claims 14 to 25.

32. A computer-readable storage medium, wherein the storage medium stores a computer program or instructions, and when the computer program or the instructions are executed by a communication apparatus, the method according to any one of claims 1 to 13 or the method according to any one of claims 14 to 25 is implemented.

33. A chip, comprising a processor, wherein the processor is coupled to a memory, and is configured to execute a computer program or instructions stored in the memory, so that the chip implements the method according to any one of claims 1 to 13 or the method according to any one of claims 14 to 25.

34. A computer program product, comprising a computer program or instructions, wherein when the computer program or the instructions are run by an apparatus, the method according to any one of claims 1 to 13 or the method according to any one of claims 14 to 25 is performed.

35. A communication system, comprising: a first terminal apparatus, wherein the first terminal apparatus is configured to implement the method according to any one of claims 1 to 13; and
a second terminal apparatus, wherein the second terminal apparatus is configured to implement the method according to any one of claims 14 to 25.
